# EUROPEAN PATENT SPECIFICATION

(11) **EP 1 865 212 B1**
(45) Date of publication and mention of the grant of the patent: **25.09.2013**
(21) Application number: 06714296.8
(22) Date of filing: 22.02.2006
(51) Int. Cl.: F16C 11/06

(54) **BALL JOINT**
KUGELGELENK
ARTICULATION SPHÉRIQUE

(30) Priority: 15.03.2005 JP 2005072303
(43) Date of publication of application: 12.12.2007
(73) Proprietor: THK CO., LTD., Shinagawa-ku, Tokyo 141-8503 (JP)
(72) Inventor: SHIRAI, Takeki c/o THK CO., LTD, Tokyo 141-8503 (JP); SAKAE, Takashi c/o THK CO., LTD, Tokyo 141-8503 (JP); MITSUGI, Takamasa c/o THK CO., LTD, Tokyo 141-8503 (JP); NISHIDE, Tetsuhiro c/o THK CO., LTD, Tokyo 141-8503 (JP)
(74) Representative: Grünecker, Kinkeldey, Stockmair & Schwanhäusser
(86) International application number: PCT/JP2006/303156
(87) International publication number: WO 2006/098124

(56) References cited:
- JP-A- 08 159 147
- JP-A- 10 159 988
- JP-A- 2000 179 537
- JP-U- 01 139 119
- JP-Y2- 2 574 530

## Description

### TECHNICAL FIELD

The present invention relates to a ball joint that is used in a suspension arm portion, a transmission control portion or the like of an automobile to form a link mechanism, and more specifically, to an improvement for preventing intrusion of dust or the like from the outside into a gap between a holder and a ball shank swingably and rotatably engaged with each other.

### BACKGROUND ART

Conventionally, a ball joint of this type is constructed of a ball shank having a ball portion at the forward end thereof and a ball reception portion embracing the ball portion; the ball portion and the ball reception portion are held in sliding contact with each other through the intermediation of a very slight gap, whereby the ball shank can freely swing within a fixed angular range with respect to the holder, and free rotating motion is possible around the axis of the ball shank.

In a ball joint constructed as described above, when dust intrudes into the gap between the ball portion of the ball shank and the ball reception portion of the holder, the sliding surfaces of the two components are flawed, which leads to premature wear. Further, smooth movement of the ball shank with respect to the holder is impaired; in view of this, a boot seal is conventionally mounted between the ball shank and the holder, thereby preventing intrusion of dust from the outside into the gap between the ball portion and the ball reception portion. Further, this boot seal also provides a retaining space for lubricant such as grease; by retaining lubricant within the boot seal, grease is constantly supplied to the sliding contact surfaces of the ball portion and the ball reception portion, making it possible to maintain smooth ball shank movement for a long period of time.

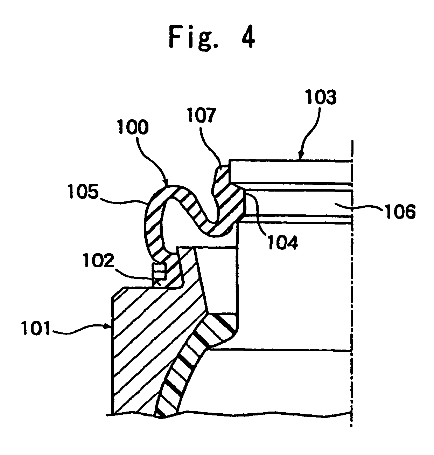

Aconventionally known boot seal is disclosed in Japanese Utility Model Registration No. 2574530. As shown in Fig. 4, a boot seal 100 is formed of a rubber-like elastic material, and there are integrally provided an annular fixation portion 102 fixed to a holder 101, an annular rib 104 attached to a shaft portion of a ball shank 103, and a seal main body portion 105 connecting the fixation portion 102 and the rib 104 to form a retaining space for lubricant. An annular mounting groove 106 is formed in the shaft portion of the ball shank 103, and the rib 104 is fitted into the mounting groove 106, thereby preventing the boot seal 100 itself from slipping down with respect to the shaft portion of the ball shank 103 at the time of swinging of the ball shank 103. Further, on top of the rib 104, there is provided upright a cylindrical dust lip 107; the dust lip 107 is fitted onto the outer peripheral surface of the shaft portion of the ball shank 103, and the forward end thereof is in press contact with the shaft portion. That is, the dust lip 107 tightens the shaft portion of the ball shank 103 by a radial shrinking force; the forward end portion of the dust lip 107 and the outer peripheral surface of the shaft portion are held in intimate contact with each other to thereby form a sealing surface, thereby preventing leakage of lubricant filling the retaining space of the boot seal 100 and intrusion of dust into the ball reception portion of the holder 101.
Patent Document 1: Japanese Utility Model Registration No. 2574530

Another conventional boot seal known from document D2 shows in Fig. 1 a dust cover 4 with a smaller diameter edge portion 42 fitted to the axial portion of the ball stud 1.

The smaller diameter edge portion 42 of the dust cover 4 is positioned to be held in contact with the lower surface of the flange portion 12 and is assembled while held in elastic contact with the entire periphery of the axial portion of the ball stud 1.

In this device, at the root portion of the smaller diameter edge portion 42 of the dust cover 4, that is, at the connected portion with the bellows portion 43, a substantially annular protrusion 44 is formed protruding, while diverging, in an integrated manner.

In an assembled state of the dust cover 4, the annular protrusion 44 is elastically fitted with the entire periphery of the outer peripheral surface of the flange portion 12 so as to entirely cover the portion from the lower surface of the flange portion 12 to the substantially lower half of the outer peripheral surface thereof.

Therefore, when the ball stud swings massively and the flange portion 12 gets in contact with a wavy part of the bellows portion 43 of the dust cover 4, the contact between these two parts happens between two parts made from elastic material, the wavy part of the bellow portion 43 made from elastic material does not get in contact with the metallic part of the flange portion 12.

As a result, the fear of friction failure at the bellows portion is minimal.

Patent Document 2 : Japanese Utility Model Application number 35545/1988 (Laid Open number 139119/1989 or JPO1-139119U)

### DISCLOSURE OF THE INVENTION

### PROBLEMS TO BE SOLVED BY THE INVENTION

However, in this conventional boot seal, no lip for forming a sealing surface is provided on the rib fitted into the mounting groove of the ball shank; the rib is provided solely for the purpose of preventing the boot seal from slipping down, and the formation of the sealing surface between the boot seal and the ball shank depends substantially solely on the dust lip. Thus, when the ball shank swings, and a tensile force is applied to the dust lip from the seal main body portion side, the contact surface pressure between the forward end of the dust lip and the ball shank is reduced, and the sealing performance of the dust lip is liable to be impaired. In particular, when, as in the case of an automotive suspension structure or the like, the ball joint is used in a portion which is liable to be exposed to a muddy water environment and in which the repetitive movement frequency of the ball shank is high, a very high sealing performance is required of the boot seal, and the conventional boot seal cannot meet the requirement to a sufficient degree.

Further, the dust lip tightens the ball shank solely in the radial direction, so when the ball shank swings and a tensile force is applied to the dust lip from the seal main body portion side, the dust lip is liable to be displaced in the axial direction of the ball shank, which also constitutes a factor impairing the sealing performance of the dust lip.

### MEANS FOR SOLVING THE PROBLEMS

The present invention has been made with a view toward solving the above problems. It is an object of the present invention to provide a ball joint which enhances the sealing performance between the boot seal and the ball shank and which can maintain this sealing performance even during swinging motion of the ball shank with respect to the holder, making it possible to completely prevent intrusion of dust and muddy water into the ball reception portion of the holder to thereby secure a satisfactory movement performance for a long period of time.

The ball joint according to the present invention includes: a ball shank and a holder connected swingably and rotatably with each other; and a boot seal mounted between the holder and the ball shank, in which: the ball shank is provided with a flange portion equipped with an abutment surface for the boot seal, with a tapered surface inclined with respect to an axial direction of the ball shank being formed in an outer peripheral portion of the abutment surface; the boot seal is constructed of an annular fixation portion fixed to the holder, an annular seal portion tightening a shaft portion of the ball shank and held in press contact with the flange portion, and a seal main body portion connecting the fixation portion and the seal portion to form a retaining space for lubricant; and the seal portion has a side lip portion corresponding to the tapered surface of the flange portion and protruding so as to diverge obliquely, the side lip portion being held in press contact with the tapered surface when the seal portion is attached to the shaft portion of the ball shank.

A side lip portion is formed on the seal portion of the boot seal, and this side lip portion protrudes so as to obliquely diverge in correspondence with the tapered surface of the flange portion. The seal portion exerts a shrinking force tightening the shaft portion of the ball shank, and there is exerted on the seal portion an axial force holding it in press contact with the flange portion of the ball shank. When the seal portion is attached to the shaft portion of the ball shank, the side lip portion is held in press contact with the tapered surface of the flange portion substantially from the front side due to those forces. As a result, if a force pulling the seal portion to the holder side is exerted due to tilting of the ball shank, displacement of the side lip portion on the tapered surface is reliably prevented, making it possible to reliably maintain the sealed state between the seal portion of the boot seal and the flange portion of the ball shank.

### BRIEF DESCRIPTION OF THE DRAWINGS

Fig. 1 is a diagram showing a ball joint according to an embodiment of the present invention.
Fig. 2 is a sectional view of a boot seal according to the embodiment.
Fig. 3 is an enlarged view showing how a seal portion of a boot seal and a ball shank are held in contact with each other.
Fig. 4 is a sectional view showing an example of the boot seal of a conventional ball joint.

### DESCRIPTION OF REFERENCE NUMERALS

1 ... ball shank, 2 ... holder, 4 ... boot seal, 10 ... columnar shaft portion, 13 ... flange portion, 14 ... abutment surface, 15 ... lock groove, 16 ... tapered surface, 30 ... retaining space, 34 ... inner peripheral lip portion, 41 ... fixation portion, 42 ... seal portion, 43 ... seal main body portion, 47 ... end surface lip portion, 48 ... side lip portion

### BEST MODE FOR CARRYING OUT THE INVENTION

In the following, the ball joint of the present invention will be described in detail with reference to the accompanying drawings.

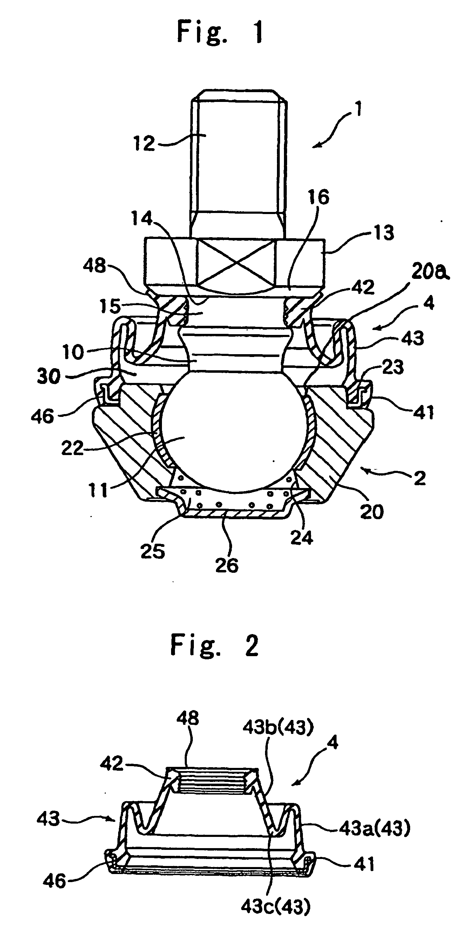

Fig. 1 shows a ball joint according to an embodiment of the present invention. In the drawing, numeral 1 indicates a ball shank, numeral 2 indicates a holder connected to the ball shank 1 swingably and rotatably, and numeral 4 indicates a boot seal mounted so as to cover the connecting portion between the ball shank 1 and the holder 2.

The ball shank 1 has a substantially columnar shaft portion 10 at the forward end of which a ball portion 11 is formed. To realize a smooth sliding contact with the holder 2, the ball portion 11 is formed by welding to the shaft portion 10 a bearing steel ball of high sphericalness. At the end of the shaft portion 10 on the side opposite to the ball portion 11, there is formed a male screw portion 12; a flange portion 13 is provided so as to be adjacent to the male screw portion 12; using the flange portion 13 as a seat surface, a connecting rod or the like forming, for example, a link mechanism, can be fixed to the ball shank 10 by a screw.

The holder 2 is equipped with a ball reception portion 20 embracing the ball portion 11 of the ball shank 1, and is equipped with a connecting portion allowing screwing of a connecting rod or the like. In Fig. 1, the connecting portion is hidden in the ball reception portion 20, and is not shown in the drawing. In the upper portion of the ball reception portion 20, there is formed an opening 20a through which the shaft portion 10 of the ball shank 1 protrudes; the ball shank 1 can freely swing with respect to the holder 2 within the range of the opening 20a. At the lower portion of the ball reception portion 20, there is formed a lubrication window 24 through which the spherical surface of the ball 11 is exposed; fit-engaged with the lubrication window 24 is a cap member 26 for forming an accommodating portion 25 for lubricant. A resin liner 22 exists between the ball portion 11 of the ball shank 1 and the ball reception portion 20 of the holder 2, and the ball portion 11 is in sliding contact with the resin liner 22 without being in direct contact with the ball reception portion 20.

The boot seal 4 is mounted between the peripheral edge of the ball reception portion 20 of the holder 2 and the shaft portion 10 of the ball shank 1, preventing intrusion of dust through the opening 20a onto the sliding surfaces of the ball portion 11 and the ball reception portion 20 and forming a retaining space 30 for supplying lubricant to the spherical surface of the ball portion 11 exposed through the opening 20a. The boot seal 4 is molded from an elastic material such as rubber, and is freely deformable in conformity with the movement of the ball shank 1 so as not to hinder free swinging motion of the ball shank 1.

Fig. 2 shows the boot seal 4 in the state before its attachment to the ball joint. The boot seal 4 is formed as a sack with both ends being open, and is constructed of an annular fixation portion 41 to be fixed to the peripheral edge of the ball reception portion 20 of the holder 2, an annular seal portion 42 to be fixed to the shaft portion 10 of the ball shank 1, and a seal main body portion 43 connecting the fixation portion 41 and the seal portion 42. Further, the seal main body portion 43 is constructed of an outer peripheral wall 43a raised from the fixation portion 41, an inner peripheral wall 43b extending vertically downwards from the seal portion 42 on the inner side of the outer peripheral wall 43a so as to overlap the outer peripheral wall 43a, and an S-shaped bent portion 43c connecting the outer peripheral wall 43a and the inner peripheral wall 43b to each other. When the ball shank 1 is caused to swing, the inner peripheral wall 43b, which is continuous with the seal portion 42, and the S-shaped bent portion 43c undergo elastic deformation in conformity with the swinging of the shaft portion 10; on the side where the ball shank 1 is tilted, the inner peripheral wall 43b and the S-shaped bent portion 43c are folded so as to overlap the outer peripheral wall 43a. On the opposite side, the S-shaped bent portion 43c expands between the outer peripheral wall 43a and the inner peripheral wall 43b so as not to hinder the swinging of the ball shank 1 so that the boot seal 4 can follow the swinging of the ball shank 1 with ease.

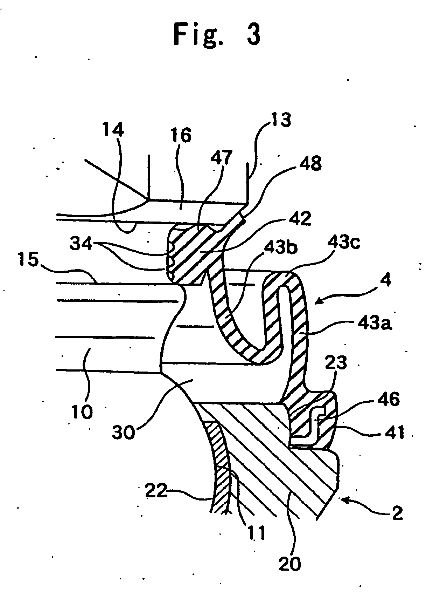

Further, as shown in Fig. 3, the fixation portion 41 is equipped with a metal reinforcing ring 46 to be engaged with the peripheral edge of the ball reception portion 20 of the holder 2; even if the boot seal 4 is deformed as a result of following the swinging of the ball shank 1, the fixation portion 41 is prevented from being detached from the ball reception portion 20. The reinforcing ring 46 is embedded in the fixation portion 41 formed of a rubber material, and solely a claw portion thereof engaged with the ball reception portion 20 is exposed to the inner side of the fixation portion 41. At the peripheral edge of the ball reception portion 20 to which the reinforcing ring 46 is fixed, there is provided a mounting portion 23 in the form of an annular cutout; the inner diameter of the reinforcing ring 36 is somewhat smaller than the outer diameter of the mounting portion 23. Thus, when fixing the fixation portion 41 of the boot seal 4 to the ball reception portion 20, a dedicated jig (not shown) is caused to abut the fixation portion 31 from above, and the fixation portion 41 is forced into the annular mounting portion 23 of the ball reception portion 20. As a result, the reinforcing ring 36 is forced into the ball reception portion 20; even if the boot seal 4 is deformed as a result of following the swinging of the ball shank 1, it is possible to prevent detachment of the fixation portion 41 from the ball reception portion 20.

Toprevent leakageof lubricant from the lubricant pocket 30, the seal portion 42 is fit-engaged with the shaft portion 10 of the ball shank 1 with some interference, and is attached to the shaft portion 10 by being forcibly opened. The seal portion 42 is in contact with the corner portion where the shaft portion 10 of the ball shank 1 and the flange portion 13 cross each other; by utilizing the urging force generated due to the elastic deformation of the seal main body portion 43, it is pressed against an abutment surface 14 situated on the ball 11 side of the flange portion 13. Further, the shaft portion 10 of the ball shank 1 has a lock groove 15 that is adjacent to the flange portion 13, and the seal portion 42 is fitted into the lock groove 15. As a result, the seal portion 42 is prevented from slipping down with respect to the shaft portion 10, and the boot seal 4 can reliably follow the swinging motion of the ball shank 1.

On the inner peripheral surface of the seal portion 42, there are formed a plurality of inner peripheral lip portions 34 to be held in press contact with the shaft portion 10 of the ball shank 1. More specifically, a plurality of grooves are formed in the inner peripheral surface of the seal portion 42 so as to extend circumferentially, and a plurality of inner peripheral lip portions 34 protrude while being divided by those grooves, preventing leakage of lubricant and intrusion of dust into the retaining space 30. Further, also from the upper surface of the seal portion 42 abutting the flange portion 13 of the ball shank 1, there protrudes an end surface lip portion 47, which is held in press contact with the abutment surface 14 of the flange portion 13, whereby sealing is effected between the seal portion 42 and the flange portion 13. That is, a plurality of seal lips 34, 47 exist on the seal portion 42, and those seal lips 34, 47 are held in press contact with the shaft portion 10 and the flange portion 13 of the ball shank 1, whereby the sealing performance between the seal portion 42 and the ball shank 1 is enhanced, thereby reliably preventing leakage of lubricant in the retaining space 30 and intrusion of dust from the outside into the retaining space 30.

Further, the flange portion 13 of the ball shank 1 has on the outer peripheral side of the abutment surface 14 a tapered surface 16 that is inclined with respect to the axial direction of the ball shank 1, and a side lip portion 48 protruding from the seal portion 32 covers the tapered surface 16. The side lip portion 48 is provided near the corner portion in the outer periphery of the seal portion 42, and protrudes so as to diverge obliquely on the radially outer side of the seal portion 42, the side lip portion 48 being in intimate contact with the tapered surface 16 of the flange portion 13.

As stated above, the seal portion 42 exerts a shrinking force to tighten the shaft portion 10 of the ball shank 1, and is pressed in the axial direction of the ball shank 1 against the abutment surface 14 of the flange portion 13, so the side lip portion 48 is pressed against the tapered surface 16 of the flange portion 13 by the resultant force of those forces. That is, substantially from the front side, the side lip portion 48 is held in press contact with the tapered surface 16, which is formed so as to be inclined with respect to the axial direction of the ball shank 1. As a result, the side lip portion 48 and the tapered surface 16 of the flange portion 13 are held in intimate contact with each other, whereby there is formed on the outer side of the end surface lip portion 47 a seal lip for preventing intrusion of dust, thereby further enhancing the sealing performance between the seal portion 42 and the ball shank 1.

Further, a force for holding the side lip portion 48 in press contact with the tapered surface 16 of the flange portion 13 is generated as the resultant force of the shrinking force in the radial direction of the seal portion 42 and the urging force in the axial direction, so even if the ball shank 1 swings and the seal main body portion 43 is changed from the bent state to the expanded state, it is possible to suppress a reduction in the press contact force of the side lip portion 48 with respect to the flange portion 13, making it possible to maintain the sealed state between the side lip portion 48 and the tapered surface 16 of the flange portion 13. Thus, it is possible to prevent, as much as possible, the sealing performance between the ball shank 1 and the boot seal 4 from being impaired as a result of swinging of the ball shank 1.

## Claims

1. A ball joint, comprising:
a ball shank (1) and a holder (2) connected swingably and rotatably with each other; and
a boot seal (4) mounted between the holder (2) and the ball shank (1),
wherein the ball shank (1) is provided with a flange portion (13) equipped with an abutment surface (14) for the boot seal (4), with a tapered surface (16) inclined with respect to an axial direction of the ball shank (1) being formed in an outer peripheral portion of the abutment surface (14),
wherein the boot seal (4) is constructed of:
an annular fixation portion (41) fixed to the holder (2);
an annular seal portion (42) tightening a shaft portion (10) of the ball shank (1) and held in press contact with the flange portion (13); and
a seal main body portion (43) connecting the fixation portion (41) and the seal portion (42) to form a retaining space (30) for lubricant, and
wherein the seal portion (42) has a side lip portion (48) corresponding to the tapered surface (16) of the flange portion (13) and protruding so as to diverge obliquely, the side lip portion (48) being held in press contact with the tapered surface (16) without covering an outer peripheral surface of the flange portion (13) adjacent to the tapered surface (16), when the seal portion (42) is attached to the shaft portion (10) of the ball shank (1).

2. The ball joint according to Claim 1, wherein the seal portion (42) is equipped with:
an end surface lip portion (47) pressed against the abutment surface (14) of the flange portion (13); and
an inner peripheral lip portion (34) radially tightening the ball shank (1).

3. The ball joint according to Claim 1, wherein the shaft portion (10) of the ball shank (1) has a circumferential lock groove (15) into which a seal portion of the boot seal (4) is fitted.

4. The ball joint according to Claim 1, wherein the seal main body portion (43) of the boot seal (4) undergoes elastic deformation in a state in which the boot seal (4) is fitted between the holder (2) and the ball shank (1), the seal portion (42) being urged toward the flange portion (13) of the ball shank (1) as a result of this deformation.

5. The ball joint according to Claim 4, wherein the seal main body portion (43) is constructed of:
an outer peripheral wall (43a) raised from the fixation portion (41) ;
an inner peripheral wall (43b) extending vertically downwards from the seal portion (42) on an inner side of the outer peripheral wall (43a) so as to overlap the outer peripheral wall (43a); and
an S-shaped bent portion (43c) connecting the outer peripheral wall (43a) and the inner peripheral wall (43b) to each other.

## Patentansprüche

1. Kugelgelenk, das umfasst:
einen Kugel-Bolzen (1) sowie einen Halter (2), die schwenkbar und drehbar miteinander verbunden sind; und
eine Dichtungsmanschette (4), die zwischen dem Halter (2) und dem Kugel-Bolzen (1) angebracht ist,
wobei der Kugel-Bolzen (1) mit einem Flanschabschnitt (13) versehen ist, der eine Anliegefläche (14) für die Dichtungsmanschette (4) aufweist, eine konische Fläche (16), die in Bezug auf eine axiale Richtung des Kugel-Bolzens (1) geneigt ist, an einem äußeren Randabschnitt der Anliegefläche (14) ausgebildet ist,
und die Dichtungsmanschette (4) besteht aus:
einem ringförmigen Fixierabschnitt (41), der an dem Halter (2) fixiert ist;
einem ringförmigen Dichtungsabschnitt (42), der einen Schaftabschnitt (10) des Kugel-Bolzens (1) umspannt und in Druckkontakt mit dem Flanschabschnitt (13) gehalten wird; und
einem Dichtungs-Hauptkörperabschnitt (43), der den Fixierabschnitt (41) und den Dichtungsabschnitt (42) verbindet, um einen Aufnahmeraum (30) für Schmiermittel zu bilden,
wobei der Dichtungsabschnitt (42) einen seitlichen Lippenabschnitt (48) hat, der der konischen Fläche (16) des Flanschabschnitts (13) entspricht und so vorsteht, dass er schräg abzweigt, und der seitliche Lippenabschnitt (48) in Druckkontakt mit der konischen Fläche gehalten wird, ohne eine äußere Randfläche des Flanschabschnitts (13) an die konische Fläche (16) angrenzend abzudecken, wenn der Dichtungsabschnitt (42) an dem Schaftabschnitt (10) des Kugel-Bolzens (1) angebracht ist.

2. Kugelgelenk nach Anspruch 1, wobei der Dichtungsabschnitt (42) aufweist:
einen Endflächen-Lippenabschnitt (47), der an die Anliegefläche (14) des Flanschabschnitts (13) gedrückt wird; und
einen Innenrand-Lippenabschnitt (34), der den Kugel-Bolzen (1) radial umspannt.

3. Kugelgelenk nach Anspruch 1, wobei der Schaftabschnitt (10) des Kugel-Bolzens (1) eine Umfangs-Arretiernut (15) hat, in die ein Dichtungsabschnitt der Dichtungsmanschette (4) eingepasst ist.

4. Kugelgelenk nach Anspruch 1, wobei der Dichtungs-Hauptkörperabschnitt (43) der Dichtungsmanschette (4) in einem Zustand, in dem die Dichtungsmanschette (4) zwischen den Halter (2) und den Kugel-Bolzen (1) eingepasst wird, elastische Verformung erfährt und der Dichtungsabschnitt (42) aufgrund dieser Verformung auf den Flanschabschnitt (13) des Kugel-Bolzens (1) zu gedrückt wird.

5. Kugelgelenk nach Anspruch 4, wobei der Dichtungs-Hauptkörperabschnitt (43) besteht aus:
einer Außenrand-Wand (43a), die sich von dem Fixierabschnitt (41) nach oben erstreckt;
eine Innenrand-Wand (43b), die sich von dem Dichtungsabschnitt (42) an einer Innenseite der Außenrand-Wand (43a) vertikal so nach unten erstreckt, dass sie die Außenrand-Wand (43a) überlappt; und
einen S-förmigen gebogenen Abschnitt (43c), der die Außenrand-Wand (43a) und die Innenrand-Wand (43b) miteinander verbindet.

## Revendications

1. Articulation sphérique comprenant :
une tige à rotule (1) et un support (2) qui sont reliés l'un à l'autre de manière à pouvoir pivoter et tourner ; et
un soufflet d'étanchéité (4) qui est installé entre le support (2) et la tige à rotule (1),
étant précisé que la tige à rotule (1) est pourvue d'une partie formant collerette (13) équipée d'une surface de butée (14) pour le soufflet d'étanchéité (4), avec une surface effilée (16), inclinée par rapport à un sens axial de la tige à rotule (1), qui est formée dans une partie périphérique extérieure de ladite surface de butée (14),
étant précisé que le soufflet d'étanchéité (4) se compose :
d'une partie de fixation annulaire (41) fixée au support (2) ;
d'une partie d'étanchéité annulaire (42) qui serre une partie d'axe (10) de la tige à rotule (1) et qui est maintenue en contact de pression avec la partie formant collerette (13) ; et
d'une partie formant corps principal d'étanchéité (43) qui relie la partie de fixation (41) et la partie d'étanchéité (42) pour former un espace de retenue (30) pour du lubrifiant, et
étant précisé que la partie d'étanchéité (42) a une partie formant lèvre latérale (48) qui correspond à la surface effilée (16) de la partie formant collerette (13) et qui fait saillie de manière à diverger en biais, la partie formant lèvre latérale (48) étant maintenue en contact de pression avec la surface effilée (16) sans couvrir une surface périphérique extérieure de la partie formant collerette (13) voisine de la surface effilée (16) quand la partie d'étanchéité (42) est fixée à la partie d'axe (10) de la tige à rotule (1).

2. Articulation sphérique selon la revendication 1, étant précisé que la partie d'étanchéité (42) est équipée :
d'une partie formant lèvre à surface d'extrémité (47) qui est pressée contre la surface de butée (14) de la partie formant collerette (13) ; et
d'une partie formant lèvre périphérique intérieure (34) qui serre radialement la tige à rotule (1).

3. Articulation sphérique selon la revendication 1, étant précisé que la partie d'axe (10) de la tige à rotule (1) a une rainure de verrouillage circonférentielle (15) dans laquelle est installée une partie d'étanchéité du soufflet d'étanchéité (4).

4. Articulation sphérique selon la revendication 1, étant précisé que la partie de corps principal d'étanchéité (43) du soufflet d'étanchéité (4) subit une déformation élastique dans un état où le soufflet d'étanchéité (4) est installé entre le support (2) et la tige à rotule (1), la partie d'étanchéité (42) étant contrainte en direction de la partie formant collerette (13) de la tige à rotule (1) à la suite de cette déformation.

5. Articulation sphérique selon la revendication 4, étant précisé que la partie de corps principal d'étanchéité (43) se compose :
d'une paroi périphérique extérieure (43a) qui se dresse à partir de la partie de fixation (41) ;
d'une paroi périphérique intérieure (43b) qui s'étend à la verticale vers le bas à partir de la partie d'étanchéité (42) sur un côté intérieur de la paroi périphérique extérieure (43a) de manière à chevaucher ladite paroi périphérique extérieure (43a) ; et
d'une partie courbe en S (43c) qui relie entre elles la paroi périphérique extérieure (43a) et la paroi périphérique intérieure (43b).
